# EUROPÄISCHE PATENTSCHRIFT

(11) **EP 3 809 316 B1**
(45) Veröffentlichungstag und Bekanntmachung des Hinweises auf die Patenterteilung: **17.06.2026**
(21) Anmeldenummer: 20164100.8
(22) Anmeldetag: 19.03.2020
(51) Int. Cl.: G06V 20/56, G01S 13/931, G01S 13/89

(54) **VORHERSAGE EINES STRASSENVERLAUFS AUF BASIS VON RADARDATEN**
PREDICTION OF A ROAD ROUTE BASED ON RADAR DATA
PRÉDICTION D'UN TRACÉ DE ROUTE EN FONCTION DES DONNÉES RADAR

(30) Priorität: 24.09.2019 EP 19199369
(43) Veröffentlichungstag der Anmeldung: 21.04.2021
(73) Patentinhaber: Elektrobit Automotive GmbH, 91058 Erlangen (DE)
(72) Erfinder: Rottach, Andreas, 65824 Schwalbach a. Ts. (DE); Trumpp, Mathias, 65824 Schwalbach a. Ts. (DE); Frings, Stefan, 65824 Schwalbach a. Ts. (DE); Kling, Dietmar, 65824 Schwalbach a. Ts. (DE); Nagel, Wilhelm, 65824 Schwalbach a. Ts. (DE)
(74) Vertreter: Aumovio Corporation

(56) Entgegenhaltungen:
- US-A1- 2019 384 304
- CHRISTIAN LUNDQUIST ET AL: "Road Intensity Based Mapping Using Radar Measurements With a Probability Hypothesis Density Filter", IEEE TRANSACTIONS ON SIGNAL PROCESSING, IEEE, USA, vol. 59, no. 4, 1 April 2011 (2011-04-01), pages 1397 - 1408, XP011349821, ISSN: 1053-587X, DOI: 10.1109/TSP.2010.2103065
- WANG BINGKE ET AL: "Polynomial Regression Network for Variable-Number Lane Detection", 11 October 2016, ECCV 2016 : 14TH EUROPEAN CONFERENCE, AMSTERDAM, THE NETHERLANDS, OCTOBER 11-14, 2016, PROCEEDINGS, PART I; [LECTURE NOTES IN COMPUTER SCIENCE; LECT.NOTES COMPUTER], PAGE(S) 719 - 734, ISBN: 978-3-319-46448-0, ISSN: 0302-9743, XP047571899

## Beschreibung

Die vorliegende Erfindung betrifft ein Verfahren, ein Computerprogramm mit Instruktionen und eine Vorrichtung zum Vorhersagen eines Straßenverlaufs auf Basis von Radardaten, insbesondere von Radardaten eines Radarsensors eines Kraftfahrzeugs.

Die Anzahl von Unfällen im Straßenverkehr kann durch die Verwendung von Fahrerassistenzsystemen deutlich reduziert werden. Fahrerassistenzsysteme können dazu die Kontrolle übernehmen, wenn gefährliche Situationen auftreten. Erste Versuche, das Autofahren sicherer zu machen, waren einfache Assistenzsysteme, wie z.B. Bremsassistenten. Inzwischen geht die Entwicklung hin zu vollständig autonomen Fahrzeugen. Ziel dieser Entwicklung ist es, Unfälle auf ein Minimum zu reduzieren.

Neben der erhöhten Sicherheit können Fahrerassistenzsysteme auch zur Steigerung des Komforts eingesetzt werden, indem dem Fahrer ein Teil der Fahraufgaben abgenommen wird. Beispiele für derartige Fahrerassistenzsysteme sind Spurhalteassistenten und eine adaptive Geschwindigkeitsregelung. Andere Fahrerassistenzsysteme können zur Verringerung des Kraftstoffverbrauchs beitragen, indem sie Beschleunigungs- und Bremsmanöver vorausplanen. Künftig könnten vollständig autonome Fahrzeuge auch die Steuerung des Verkehrsflusses durch entsprechende Systeme zur Reduzierung von Staus ermöglichen.

Um Systeme zu realisieren, die in der Lage sind, Entscheidungen zu treffen, muss eine umfassende Sicht auf die Umwelt modelliert werden. Die zunehmende Komplexität solcher Assistenzsysteme erfordert immer genauere Modelle. Daher werden Echtzeitdaten von verschiedenen Arten von Sensoren, die im Fahrzeug integriert sind, zu einer umfassenden konsistenten Darstellung der Umgebung fusioniert.

Da viele Fahrerassistenzsysteme sowie autonome Fahrzeuge Informationen über die Straße vor dem Fahrzeug und ihre relative Position benötigen, sind Systeme zur Erkennung der Fahrspur sowie der Straßenränder von großer Bedeutung. Diese Informationen können zur Unterstützung des Fahrers bei Navigationsaufgaben und zur Lokalisierung des Fahrzeugs in der Umgebung verwendet werden.

Zur Erkennung der Fahrspur sowie der Straßenränder existieren bereits eine Reihe von Technologien, die auf der Auswertung von Kameradaten, Lidardaten oder Radardaten basieren.

Beispielsweise beschreibt der Artikel "Vanishing point detection for road detection" von H. Kong et al. [1] einen Ansatz für die Segmentierung eines Straßenbereichs aus einem einzigen Bild. Der Ansatz basiert auf der Schätzung eines Fluchtpunktes der Straße unter Verwendung eines lokal adaptiven Soft-Voting-Algorithmus. Der geschätzte Fluchtpunkt wird dann als Randbedingung verwendet, um zwei dominante Kanten für die Segmentierung des Straßenbereichs zu ermitteln.

DE 10 2018 131 477 A1 beschreibt ein Verfahren zur Steuerung eines Fahrzeugs. Bei dem Verfahren werden Bilddaten einer Vielzahl von Kameras des Fahrzeugs empfangen und zusammengesetzt. Basierend auf den zusammengesetzten Bilddaten werden Fahrspurmerkmale unter Verwendung eines künstlichen neuronalen Netzes klassifiziert und lokalisiert. Basierend auf den klassifizierten und lokalisierten Fahrspurdaten werden mittels eines Datenfusionsprozesses fusionierte Fahrspurmerkmalsdaten erzeugt. Basierend auf diesen fusionierten Fahrspurmerkmalsdaten wird das Fahrzeug gesteuert.

Der Artikel "Lidar-based road and road-edge detection" von W. Zhang [2] beschreibt ein LIDAR-basiertes Verfahren zur Erkennung von Straßen und Fahrbahnrändern. Die Lidardaten werden zerlegt in Signale in Bezug auf die Höhe und in Signale, die auf die Bodenebene projiziert werden. Zunächst werden die Signale in Bezug auf die Höhe durch Filtertechniken verarbeitet, um eine Kandidatenregion für eine Straße zu identifizieren. Durch Mustererkennungstechniken wird bestimmt, ob die Kandidatenregion ein Straßensegment ist. Dann wird eine Liniendarstellung der auf die Bodenebene projizierten Signale identifiziert und mit einem einfachen Straßenmodell in der Draufsicht verglichen, um zu bestimmen, ob die Kandidatenregion ein Straßensegment mit zugehörigen Straßenrändern ist.

Der Artikel "Efficient occupancy grid computation on the GPU with lidar and radar for road boundary detection" von F. Homm et al. [3] beschreibt einen Ansatz für eine schnelle Berechnung von Belegungsrasterkarten mit Laserentfernungsmessern und Radarsensoren. Der Ansatz nutzt eine GPU, um die Einschränkungen der klassischen Belegungsrasterberechnung in der Automobilbranche zu überwinden. Mittels eines Histogramm-basierten Ansatzes können so Straßenränder mit Hilfe der Belegungsrasterkarten detektiert werden.

Dokument CHRISTIAN LUNDQUIST ET AL: "Road Intensity Based Mapping Using Radar Measurements With a Probability Hypothesis Density Filter", IEEE TRANSACTIONS ON SIGNAL PROCESSING, Bd. 59, Nr. 4, 1. April 2011 beschreibt ein Verfahren zur Umgebungsmodellierung für Fahrzeuge mittels eines PHD-Filters auf Basis von Radardaten. Es werden stationäre Objekte wie Leitplanken durch Clustering und polynomiale Modellierung erkannt. Die Methode nutzt eine Mischung aus Gauss-Komponenten zur Kartenerstellung.

Viele der neueren Ansätze basieren auf manuell erstellten Merkmalen, vordefinierten Modellen oder Heuristiken, um eine aussagekräftige Beschreibung der Straßenränder zu erstellen. Diese Systeme sind für den Einsatz auf Autobahnen gedacht und können in komplexen Szenarien, wie z.B. in städtischen Gebieten, versagen. Ansätze, die auf Belegungsrastern und Freiräumen basieren, sind in ihrer unterstützten Straßengeometrie flexibler. Freiraummodelle können jedoch alle befahrbaren Bereiche identifizieren und sind nicht auf die eigentliche Straße beschränkt. Daher könnten auch Parkplätze, Autobahnrampen und andere unerwünschte Bereiche in den Freiraum einbezogen werden.

Auf maschinellem Lernen basierende Ansätze konzentrieren sich aufgrund der zunehmenden Beliebtheit von neuronalen Faltungsnetzwerken (Convolutional Neural Networks, CNN) hauptsächlich auf kamerabasierte Bildsysteme.

Es ist eine Aufgabe der vorliegenden Erfindung, verbesserte Lösungen für eine Vorhersage eines Straßenverlaufs auf Basis von Radardaten eines Radarsensors eines Kraftfahrzeugs bereitzustellen.

Diese Aufgabe wird durch ein Verfahren mit den Merkmalen des Anspruchs 1, durch ein Computerprogramm mit Instruktionen mit den Merkmalen des

Anspruchs 5 und durch eine Vorrichtung mit den Merkmalen des Anspruchs 6 gelöst. Bevorzugte Ausgestaltungen der Erfindung sind Gegenstand der abhängigen Ansprüche.

Gemäß einem ersten Aspekt der Erfindung umfasst ein Verfahren zum Vorhersagen eines Straßenverlaufs auf Basis von Radardaten eines Radarsensors eines Kraftfahrzeugs die Schritte:
- Empfangen der Radardaten;
- Akkumulieren der Radardaten in einem Messraster;
- Bilden von Clustern für Objekte im Messraster;
- Verarbeiten der Cluster zum Bestimmen von Polynomen zur Beschreibung der Straßenränder; und
- Ausgeben der Polynome.

Gemäß einem weiteren Aspekt der Erfindung umfasst ein Computerprogramm Instruktionen, die bei Ausführung durch einen Computer den Computer zur Ausführung der folgenden Schritte zum Vorhersagen eines Straßenverlaufs auf Basis von Radardaten eines Radarsensors eines Kraftfahrzeugs veranlassen:
- Empfangen der Radardaten;
- Akkumulieren der Radardaten in einem Messraster;
- Bilden von Clustern für Objekte im Messraster;
- Verarbeiten der Cluster zum Bestimmen von Polynomen zur Beschreibung der Straßenränder; und
- Ausgeben der Polynome.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung ist eine Vorrichtung zum Vorhersagen eines Straßenverlaufs auf Basis von Radardaten eines Radarsensors eines Kraftfahrzeugs zur Ausführung der folgenden Schritte eingerichtet:
- Empfangen der Radardaten;
- Akkumulieren der Radardaten in einem Messraster;
- Bilden von Clustern für Objekte im Messraster;
- Verarbeiten der Cluster zum Bestimmen von Polynomen zur Beschreibung der Straßenränder; und
- Ausgeben der Polynome.

Zu diesem Zweck weist die Vorrichtung vorzugsweise auf:
- ein Empfangsmodul zum Empfangen der Radardaten;
- ein Vorverarbeitungsmodul zum Akkumulieren der Radardaten in einem Messraster und zum Bilden von Clustern für Objekte im Messraster;
- ein Verarbeitungsmodul zum Verarbeiten der Cluster zum Bestimmen von Polynomen zur Beschreibung der Straßenränder; und
- ein Ausgabemodul zum Ausgeben der Polynome.

Bei der erfindungsgemäßen Lösung werden Radardaten eines fahrenden Fahrzeugs vorverarbeitet und dabei zu zusammengehörigen Objekten zusammengefasst. Dies führt zu einer deutlichen Reduzierung der Komplexität und des Rauschens, da das gesamte Messraster durch eine Menge von Clustern für die Objekte abstrahiert werden kann. Zum Schätzen des Straßenverlaufs werden anschließend die resultierenden Radar-Cluster verarbeitet. Der Straßenverlauf wird dabei modelliert als Polynom für die linke und die rechte Straßenseite. Die beschriebene Lösung erlaubt eine relativ simple Modellierung des Problems, ohne dabei auf von Hand entworfene Heuristiken zurückgreifen zu müssen. Im Ergebnis reduziert dies die Anzahl möglicher Fehler im Code und erlaubt ein einfacher strukturiertes Programm bei zugleich besserer Performanz, je nach Verfügbarkeit der Daten. Dabei wird bei einer großen Menge an verfügbaren Daten eine höhere Genauigkeit der Detektion erreicht sowie eine bessere Handhabung von schwierigen Szenarien. Je mehr Daten verfügbar sind, desto besser werden die Vorhersagen. Da keine manuelle Behandlung aller Spezialfälle notwendig ist, ist die erfindungsgemäße Lösung einfacher und flexibler als bekannte Lösungen.

Es werden Cluster-Beschreibungen für die Cluster generiert. Vorzugsweise umfassen die Cluster-Beschreibungen jeweils ein Zentrum des Clusters und eine Beschreibung einer Hülle des Clusters in Form eines Hüllenpolygons. Durch ein Hüllenpolygon lässt sich die Form eines Objekts bzw. des Clusters näherungsweise beschreiben. Zusätzlich kann eine Bounding Box für den Cluster bestimmt werden. In die Cluster-Beschreibungen können zusätzliche Informationen aufgenommen werden, wie z.B. eine Wahrscheinlichkeit, die angibt, wie wahrscheinlich es ist, dass sich ein Objekt bewegt. Eine weitere Information kann die Wahrscheinlichkeit der Existenz eines erkannten Objekts sein.

Die Cluster werden mittels eines rezeptiven Feldes in einen Merkmalsraum transformiert. Die Cluster können dazu mit den einzelnen Rezeptoren des rezeptiven Feldes gefaltet werden. Ein rezeptives Feld, bestehend z.B. aus 50 bis 500 Rezeptoren, dient der Merkmals-Repräsentation für die weitere Regression. Das rezeptive Feld eines einzelnen Rezeptors ist dabei definiert durch die Wahrscheinlichkeitsdichtefunktion (Probability Density Function, PDF) einer 2D-Normalverteilung mit endlicher Ausdehnung. Die Ausdehnung ist definiert durch einen Schwellwert für den maximalen Abstand zum Rezeptor Zentrum. Stimuli, die näher am Zentrum des Rezeptors auftreten, geben dabei eine stärkere Antwort. Anders formuliert, die Cluster bzw. ihre Hüllenbeschreibungen werden mit den einzelnen Rezeptoren gefaltet und dadurch in einen Merkmalsraum mit einer festen Anzahl an Dimensionen transformiert. Jeder Rezeptor stellt dabei eine Dimension im Merkmalsraum dar. Im Vergleich zu bekannten typischen Convolutional Neural Networks, die auf Bildern arbeiten, werden durch das rezeptive Feld nur wenige 100 Werte generiert. Ein Convolutional Neural Network hat hingegen für gewöhnlich viele Merkmalskarten unterschiedlicher Größe, die jeweils 2D-Arrays mit Merkmalen enthalten und dadurch mehr Rechenleistung sowie Speicherplatz benötigen. Besonders effizient lässt sich das Auswerten rezeptiver Felder parallel durchführen, zum Beispiel auf einer Grafikkarte.

Gemäß einem Aspekt der Erfindung werden die Zentren der Rezeptoren und die Kovarianzmatrizen der Rezeptoren manuell oder durch evolutionäre Algorithmen bestimmt. Die Qualität der Merkmalsextraktion hängt von der Lage, der Orientierung und der Form der einzelnen Rezeptoren ab, aus denen sich das rezeptive Feld zusammensetzt. Intuitiv können z.B. ein regelmäßiges Raster oder ein regelmäßiges hexagonales Raster realisiert werden. Alternativ können auch zirkulare Anordnungen verwendet werden. Besonders vorteilhaft werden evolutionäre Strategien auf das rezeptive Feld angewandt, da durch die Evolution der Rezeptoren und die dadurch ausgeführte Optimierung der Qualität der Straßenerkennung eine verbesserte Merkmalsraumdarstellung der Radar-Cluster erzielt werden kann.

Die Beschreibung der Cluster dient im Merkmalsraum als Eingangsgröße für ein neuronales Netz. Das neuronale Netz ist zur Regression von Parametern der Polynome zur Beschreibung der Straßenränder trainiert. Das rezeptive Feld sowie das neuronale Netz lassen sich vorteilhaft auch als Pipeline realisieren. Das neuronale Netz betrachtet die vom Radar detektierten Objekt-Cluster aus einer 2D-Draufsicht auf die Welt um das Fahrzeug herum. Beispielsweise lassen sich in den Radardaten Leitplanken erkennen. Der Verlauf der Leitplanken entlang der Fahrbahn wird vom neuronalen Netz genutzt, um den Straßenverlauf zu schätzen. Die Fähigkeiten des Systems hängen hauptsächlich von den gewählten Trainingsdaten ab. Neue, unbekannte Szenarien oder Spezialfälle können erlernt werden, indem mehr Trainingsdaten aufbereitet werden, d.h. allein durch das Erzeugen von Referenzdaten, die Radardaten plus den zugehörigen Straßenverlauf umfassen. Eine Anpassung des Algorithmus ist nicht notwendig. Durch die Verwendung eines neuronalen Netzes wird eine besondere Art Dynamik erreicht. Das neuronale Netz sorgt für gewöhnlich für glatte, sich gleichmäßig verändernde Ausgaben. Im Vergleich zu anderen Ansätzen kommt es weniger zu sprunghaften Änderungen der Ausgabe.

Zum Training des neuronalen Netzes kann eine Fehlerfunktion verwendet werden, die den Fehler der Ausgabe-Polynome, d.h. der Vorhersage, im geometrischen Raum minimiert, d.h. im Ego-Koordinatensystem des Fahrzeugs, anstatt direkt den Polynom-Parametervektor zu optimieren. Dies sorgt dafür, dass das Netzwerk besser in der Lage ist, bei unbekannten Szenarien zu generalisieren. Das neuronale Netz wird vorteilhaft mit Hilfe bestehender Bibliotheken realisiert, wie z.B. Keras, Tensorflow, Caffe, Torch, Theano, etc.

Vorzugsweise wird ein erfindungsgemäßes Verfahren oder eine erfindungsgemäße Vorrichtung in einem Kraftfahrzeug eingesetzt, z.B. in einem teilautonomen, autonomen oder mit zumindest einem Assistenzsystem ausgestatteten Kraftfahrzeug. Beispielsweise kann eine erfindungsgemäße Lösung verwendet werden, um den Straßenverlauf auf Autobahnen, Landstraßen und, mit genügend Daten, auch innerorts vorherzusagen. Der vorhergesagte Straßenverlauf kann für eine Vielzahl von Assistenzsystem verwendet werden, wie z.B. Spurhalteassistenten.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Vorhersagen eines Straßenverlaufs auf Basis von Radardaten eines Radarsensors eines Kraftfahrzeugs;
- Fig. 2: zeigt schematisch eine erste Ausführungsform einer Vorrichtung zum Vorhersagen eines Straßenverlaufs auf Basis von Radardaten eines Radarsensors eines Kraftfahrzeugs;
- Fig. 3: zeigt schematisch eine zweite Ausführungsform einer Vorrichtung zum Vorhersagen eines Straßenverlaufs auf Basis von Radardaten eines Radarsensors eines Kraftfahrzeugs;
- Fig. 4: zeigt schematisch ein Kraftfahrzeug, in dem eine erfindungsgemäße Lösung realisiert ist;
- Fig. 5: zeigt Cluster von Radardaten in einem Messraster;
- Fig. 6: zeigt schematisch ein Beispiel eines Rezeptors;
- Fig. 7: veranschaulicht verschiedene Abtastmodelle für die Cluster;
- Fig. 8: zeigt den Effekt der Abtastmodelle aus Fig. 7;
- Fig. 9: zeigt schematisch verschiedene Anordnungen von Rezeptoren;
- Fig. 10: zeigt Beispiele für Ausgabemodelle zur Beschreibung von Straßenrändern;
- Fig. 11: veranschaulicht eine Verlustfunktion im geometrischen Raum;
- Fig. 12: zeigt zwei getrennte Netzwerke für den linken und den rechten Straßenrand;
- Fig. 13: zeigt ein Netzwerk mit gemeinsam genutzten Schichten und aufgabenspezifischen Schichten;
- Fig. 14: zeigt ein Netzwerk mit ausschließlich gemeinsam genutzten Schichten;
- Fig. 15: zeigt ein neuronales Faltungsnetzwerk, das unmittelbar die Ausgabe des rezeptiven Feldes als Eingangsgröße nutzt;
- Fig. 16: zeigt eine Modellierung von Straßenrändern mit Polygonzügen in einem interaktiven Werkzeug; und
- Fig. 17: zeigt ein Beispielszenario für eine Polynomanpassung.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

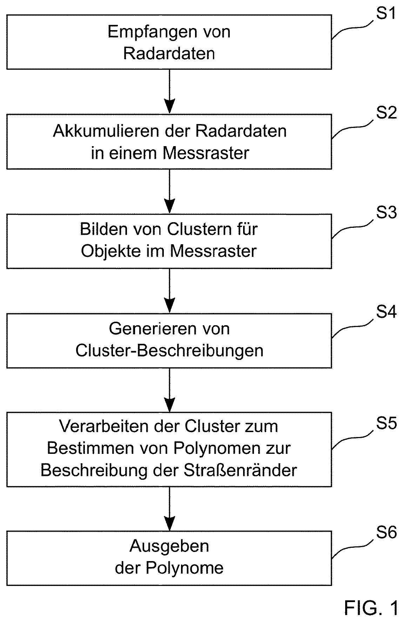

Fig. 1 zeigt schematisch ein Verfahren zum Vorhersagen eines Straßenverlaufs auf Basis von Radardaten eines Radarsensors eines Kraftfahrzeugs. In einem ersten Schritt S1 werden die zu verarbeitenden Radardaten empfangen, die dann in einem Messraster akkumuliert werden S2. Anschließend werden Cluster für Objekte im Messraster gebildet S3. Zudem werden Cluster-Beschreibungen für die Cluster generiert S4. Die Cluster-Beschreibungen umfassen z.B. jeweils ein Zentrum des Clusters, eine Beschreibung einer Hülle des Clusters in Form eines Hüllenpolygons und eine Bounding Box. Die resultierenden Cluster werden verarbeitet S5, um Polynome zur Beschreibung der Straßenränder zu bestimmen. Bei der Verarbeitung S5 können die Cluster zunächst mittels eines rezeptiven Feldes in einen Merkmalsraum transformiert werden. Dazu werden die Cluster beispielsweise mit den einzelnen Rezeptoren des rezeptiven Feldes gefaltet. Die Zentren der Rezeptoren und die Kovarianzmatrizen der Rezeptoren können manuell oder durch evolutionäre Algorithmen bestimmt werden. Die Beschreibung der Cluster im Merkmalsraum dient dann als Eingangsgröße für ein neuronales Netz, das zur Regression von Parametern der Polynome zur Beschreibung der Straßenränder trainiert ist. Die ermittelten Polynome werden schließlich zur weiteren Verwendung ausgegeben S6.

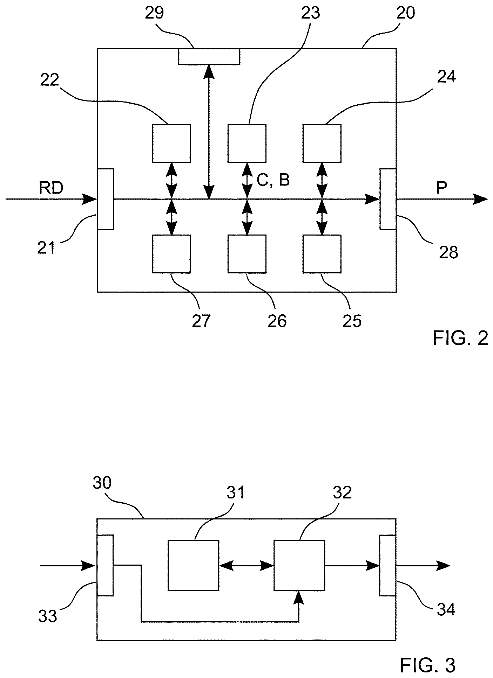

Fig. 2 zeigt eine vereinfachte schematische Darstellung einer ersten Ausführungsform einer Vorrichtung 20 zum Vorhersagen eines Straßenverlaufs auf Basis von Radardaten RD eines Radarsensors eines Kraftfahrzeugs. Die Vorrichtung 20 hat einen Eingang 21, über den ein Empfangsmodul 22 die zu verarbeitenden Radardaten RD empfängt. Ein Vorverarbeitungsmodul 23 akkumuliert die Radardaten RD in einem Messraster und bildet Cluster C für Objekte im Messraster. Das Vorverarbeitungsmodul 23 kann zudem Cluster-Beschreibungen B für die Cluster C generieren. Die Cluster-Beschreibungen B umfassen z.B. jeweils ein Zentrum des Clusters C, eine Beschreibung einer Hülle des Clusters C in Form eines Hüllenpolygons und eine Bounding Box. Ein Verarbeitungsmodul 24 verarbeitet die Cluster C zum Bestimmen von Polynomen P zur Beschreibung der Straßenränder. Das Verarbeitungsmodul 24 kann dazu die Cluster C zunächst mittels eines rezeptiven Feldes in einen Merkmalsraum transformieren, indem die Cluster C beispielsweise mit den einzelnen Rezeptoren des rezeptiven Feldes gefaltet werden. Die Zentren der Rezeptoren und die

Kovarianzmatrizen der Rezeptoren können manuell oder durch evolutionäre Algorithmen bestimmt werden. Die Beschreibung der Cluster C im Merkmalsraum dient dann als Eingangsgröße für ein neuronales Netz, das zur Regression von Parametern der Polynome P zur Beschreibung der Straßenränder trainiert ist. Die vom Verarbeitungsmodul 24 bestimmten Polynome P können von einem Ausgabemodul 25 über einen Ausgang 28 der Vorrichtung 20 zur weiteren Verwendung ausgegeben werden.

Die verschiedenen Module 22-25 können von einem Kontrollmodul 26 gesteuert werden. Über eine Benutzerschnittstelle 29 können gegebenenfalls Einstellungen der Module 22-26 geändert werden. Die in der Vorrichtung 20 anfallenden Daten können bei Bedarf in einem Speicher 27 der Vorrichtung 20 abgelegt werden, beispielsweise für eine spätere Auswertung oder für eine Nutzung durch die Komponenten der Vorrichtung 20. Die Module 22-26 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 28 können als getrennte Schnittstellen oder als eine kombinierte bidirektionale Schnittstelle implementiert sein.

Fig. 3 zeigt eine vereinfachte schematische Darstellung einer zweiten Ausführungsform einer Vorrichtung 30 zum Vorhersagen eines Straßenverlaufs auf Basis von Radardaten eines Radarsensors eines Kraftfahrzeugs. Die Vorrichtung 30 weist einen Prozessor 32 und einen Speicher 31 auf. Beispielsweise handelt es sich bei der Vorrichtung 30 um ein Steuergerät oder einen Controller. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Radardaten. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

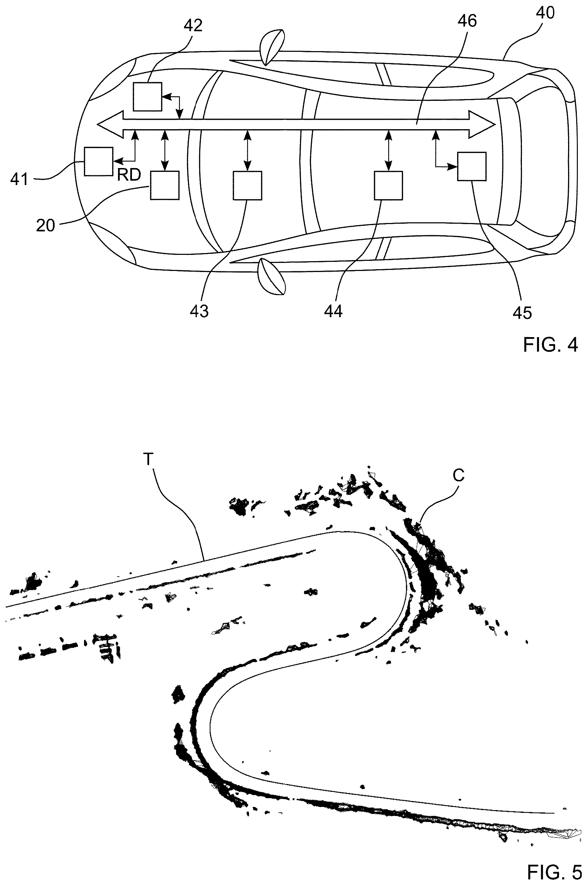

Fig. 4 zeigt schematisch ein Kraftfahrzeug 40, in dem eine erfindungsgemäße Lösung realisiert ist. Das Kraftfahrzeug 40 weist einen Radarsensor 41 auf, mit dem Radardaten RD einer Umgebung des Kraftfahrzeugs 40 erfasst werden. Das Kraftfahrzeug 40 weist zudem eine Vorrichtung 20 zum Vorhersagen eines Straßenverlaufs auf Basis der Radardaten RD auf. Von der Vorrichtung 20 bestimmte Polynome P zur Beschreibung der Straßenränder werden an zumindest ein Assistenzsystem 42 des Kraftfahrzeugs 40 ausgegeben. Die Vorrichtung 20 kann natürlich auch in das Assistenzsystem 42 integriert sein. Weitere Bestandteile des Kraftfahrzeugs 40 sind in diesem Beispiel ein Navigationssystem 43, durch das Positionsinformationen bereitgestellt werden können, sowie eine Datenübertragungseinheit 44. Mittels der Datenübertragungseinheit 44 kann beispielsweise eine Verbindung zu einem Backend aufgebaut werden, z.B. um aktualisierte Software zu beziehen. Zur Speicherung von Daten ist ein Speicher 45 vorhanden. Der Datenaustausch zwischen den verschiedenen Komponenten des Kraftfahrzeugs 40 erfolgt über ein Netzwerk 46.

Nachfolgend sollen zusätzliche Details der Erfindung anhand von Fig. 5 bis Fig. 17 beschrieben werden.

Im Rahmen des Straßenbaus werden Klothoiden verwendet, um die Straßengeometrie zu modellieren. Eine Klothoide ist eine ebene Kurve, die in der Ebene bis auf Ähnlichkeit durch die Eigenschaft eindeutig bestimmt ist, dass die Krümmung an jeder Stelle der Kurve proportional zur Länge ihres Bogens bis zu dieser Stelle ist. Die Krümmung ändert sich somit linear entlang der Kurve. Klothoiden ermöglichen fließende Übergänge zwischen Kreisen und geraden Liniensegmenten. Sie können abschnittsweise durch Polynome angenähert werden. Dazu werden vorzugsweise Polynome dritter Ordnung verwendet. Am Übergangspunkt zwischen den Polynomen werden dabei erste und zweite Ableitung gleich 0 gesetzt. Es bietet sich daher an, für die Vorhersage des Straßenverlaufs Polynome zu verwenden.

Ausgangspunkt für die Vorhersage des Straßenverlaufs ist eine vorverarbeitete Repräsentation der Fahrzeugumgebung. Der Radarsensor des Fahrzeugs erfasst kontinuierlich Messdaten, die in einem Messraster akkumuliert werden. Das Messraster dient dazu, die aufeinanderfolgenden Radarscans nachzuverfolgen, zu glätten und zu einem kohärenten Model der Umgebung zusammenzufügen. Objekte im Messraster werden dann zu Clustern C zusammengefasst, für die jeweils eine Cluster-Beschreibung generiert wird. Die Cluster-Beschreibung kann Informationen zum Zentrum des Clusters C, ein Label (Hindernis, ...), eine an den Achsen des Messrasters ausgerichtete Bounding Box des Clusters C und eine Repräsentation der Hülle des Clusters C in Form eines 2D-Polygons beinhalten. Fig. 5 zeigt solche Cluster C von Radardaten in einem Messraster entlang einer Trajektorie T des Fahrzeugs. Die Cluster C sind in Weltkoordinaten dargestellt, wobei nur unbewegliche Objekte berücksichtigt wurden. Fig. 5 stellt zu Illustrationszwecken die Daten des Messrasters im Weltkoordinatensystem über einen größeren Zeitraum dar, z.B. die letzten 10 Sekunden, nicht die Sicht eines Fahrzeugs zu einem gegebenen Zeitpunkt. Zu einem einzelnen Zeitpunkt wird zwar auch akkumuliert, aber über deutliche kürzere Zeiträume. In der Darstellung ist deutlich eine Straßengeometrie erkennbar. Ziel ist es, anhand der Cluster-Daten die Lage und Form der Straßenränder vorherzusagen. Herausforderungen bestehen dabei darin, dass die Messraster als Eingangsgrößen für die weitere Verarbeitung eine variable Anzahl von Clustern C beinhalten, und dass die Cluster C ihrerseits eine variable Anzahl an Punkten zur Modellierung des Hüllenpolygons aufweisen.

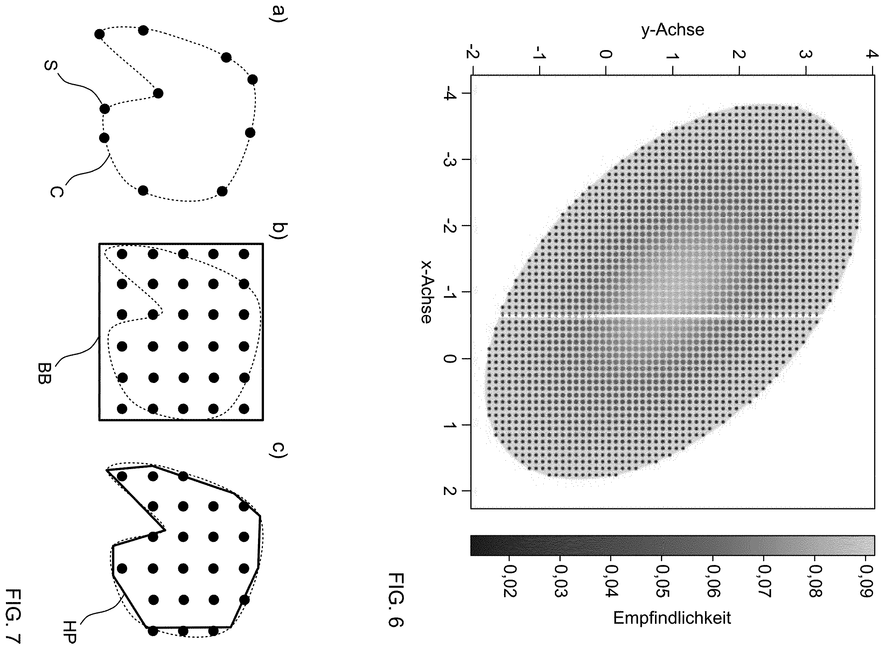

Erfindungsgemäß erfolgt zunächst eine Verarbeitung der Eingangsdaten, bei der die Radar-Cluster in eine Darstellung transformiert werden, die einfacher handzuhaben ist. Diese Transformation basiert auf einem rezeptiven Feld, d.h. einer Anordnung von Rezeptoren. Rezeptive Felder haben ihren Ursprung in der Biologie, wo sie beispielsweise im visuellen Kortex von Tieren und Menschen zu finden sind. Ein rezeptives Feld stellt einen Satz von quasi-Sensoren dar, beispielsweise mit einer Gaußschen Form und Antwortkurve. Das individuelle rezeptive Feld jedes Rezeptors ist in diesem Fall definiert als 2D multivariate Gaußsche Wahrscheinlichkeitsdichtefunktion mit einer endlichen Ausdehnung. Allgemein können rezeptive Felder beliebige Formen haben. Sie werden beispielsweise im menschlichen Sehsystem von Stufe zu Stufe zunehmend komplexer. Fig. 6 zeigt schematisch ein Beispiel eines Rezeptors. Die zu erkennende Ellipse stellt die sensitive Fläche dar. Die einzelnen Punkte veranschaulichen die Empfindlichkeit an verschiedenen Positionen. Mit Hilfe solcher gaußförmigen Rezeptoren können einzelne punktförmige Reize in einen n-dimensionalen Merkmalsraum transformiert werden, wobei n gleich der Anzahl der Rezeptoren im gesamten rezeptiven Feld ist.

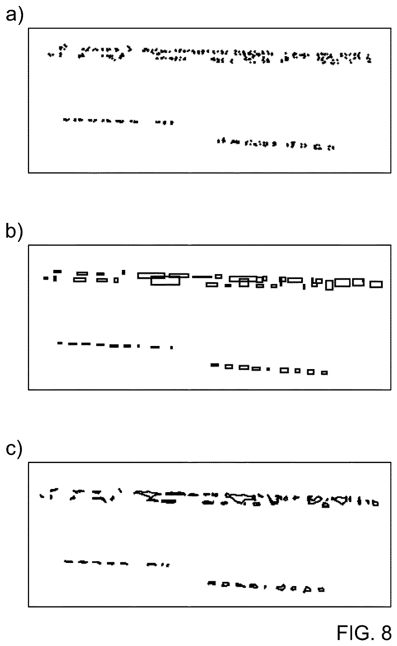

Allerdings werden die Radar-Cluster C durch ihre Hüllenpolygone repräsentiert, die aus einzelnen verbundenen Punkten bestehen. Die Radar-Cluster C müssen daher zunächst in einen Satz von individuellen Stimuli S umgewandelt werden. Dazu können unterschiedliche Ansätze genutzt werden, die auf verschiedenen Abtastmodellen beruhen. Fig. 7 veranschaulicht drei derartige Abtastmodelle für die Cluster C. Die einzelnen Stimuli S werden dabei durch die schwarzen Kreise veranschaulicht. Fig. 8 zeigt den Effekt der Abtastmodelle aus Fig. 7.

Bei einem ersten Modell, das in Fig. 7a) dargestellt ist, werden unmittelbar die Punkte des Hüllenpolygons genutzt, d.h. die Konnektivitätsinformationen der Cluster-Hüllen werden ignoriert und die Hüllenpunkte der Cluster zu einem Zeitpunkt des Messrasters werden in das rezeptive Feld eingespeist. Dieser Ansatz ist eine sehr grobe Annäherung an die Eingangsdaten und verwirft die Konnektivitätsinformationen der Cluster vollständig. Zudem hat er zwei strukturelle Schwächen. Ein erstes Problem besteht darin, dass Rezeptoren, die sich vollständig innerhalb eines einzigen Clusters befinden, den Cluster selbst nicht wahrnehmen können, da nur die Hüllenpunkte berücksichtigt werden. Ein zweites Problem ist der Umstand, dass die Hüllenpolygone nicht zwingend eine konstante Abtastrate entlang der Grenze haben. Unterschiedliche Cluster mit derselben Form und Lage können daher zu unterschiedlichen Rezeptorantworten führen und die Antwort ist nicht proportional zur Form und Größe des Clusters. Dieses Problem lässt sich durch eine erneute Abtastung der Polygonhülle entlang der Grenze lösen.

Bei einem zweiten Modell, das in Fig. 7b) dargestellt ist, wird ein Cluster C durch seine Bounding Box BB repräsentiert, die dann mit einer konstanten Schrittweite von beispielsweise 50 cm entlang der x-Achse und der y-Achse abgetastet wird. In diesem Fall sind die Rezeptorantworten auf einen Cluster proportional zur Größe seiner Bounding Box. Zudem verpassen kleine Rezeptoren keinen Stimulus S, wenn sie sich innerhalb eines Clusters befinden. Nachteilig an diesem Ansatz ist der Umstand, dass eine achsenorientierte Bounding Box BB wiederum eine grobe Annäherung für beliebige Polygonhüllen darstellt.

Bei einem dritten Modell, das in Fig. 7c) dargestellt ist, wird die Fläche des Hüllenpolygons HP abgetastet, z.B. wiederum mit einer konstanten Schrittweite von 50 cm entlang der x-Achse und der y-Achse. Der Satz von Stimuli S beinhaltet dann alle Abtastpunkte, die innerhalb des Polygons liegen. Dieser Ansatz erhöht die Plausibilität der Transformation der Radar-Cluster in den Merkmalsraum, erhöht aber auch die Berechnungskomplexität, da hunderte oder sogar tausende von Hüllenpolygonen gerendert und die jeweiligen Punkte extrahiert werden müssen.

Diese Aufgabe ist vergleichbar mit der Vorverarbeitung, die für die direkte Anwendung von CNNs erforderlich ist. Eine Möglichkeit besteht darin, die Radar-Cluster zunächst als ein Binär- oder Graustufenbild mit einer bestimmten Intensität zu rendern. Alle Pixelkoordinaten, die den Clustern entsprechen, werden aus dem Bild extrahiert und in das Ego-Koordinatensystem zurücktransformiert, in dem sich die Rezeptoren befinden. Danach kann die Antwort der Rezeptoren auf den so ermittelten Satz von Stimuli berechnet werden.

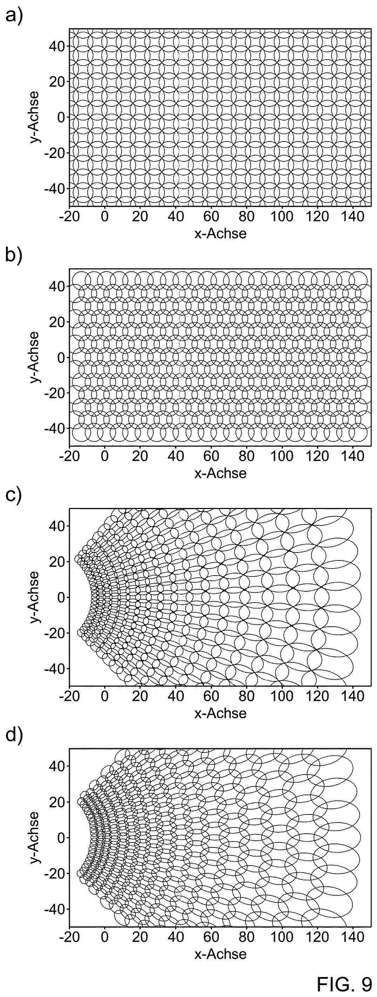

Die Rezeptoren können auf unterschiedliche Weise angeordnet sein. Fig. 9 zeigt schematisch vier verschiedene Anordnungen von Rezeptoren. Fig. 9a) zeigt dabei ein regelmäßiges Raster, Fig. 9b) ein regelmäßiges Raster mit hexagonaler Anordnung, Fig. 9c) eine kreisförmige Anordnung und Fig. 9d) eine kreisförmig hexagonale Anordnung.

Das regelmäßige Raster in Fig. 9a) besteht aus gleich geformten Rezeptoren mit konstanter Ausdehnung in x- und y-Richtung und einem festen Abstand entlang der x- und y-Achse. Die Varianzen sind so gewählt, dass der gesamte Eingangsraum abgedeckt wird, was zu leichten Überlappungen zwischen den benachbarten Rezeptoren führt. Dieser Ansatz ist nicht orientierungsselektiv, aber er kann in Kombination mit CNN-basierten Systemen verwendet werden, da die Merkmalskanäle in ein 2D-Bild umgeformt werden können.

Das regelmäßige Raster mit hexagonaler Anordnung in Fig. 9b) ist eine Variation des regelmäßigen Rasters, bei dem das Layout nicht rechteckig, sondern hexagonal ist. Jede zweite Reihe von Rezeptoren ist entlang der x-Achse um die Hälfte des festen Rezeptorabstandes versetzt. Dadurch können Aliasing-Artefakte reduziert werden, die auftreten können, wenn sich Stimuli zwischen zwei benachbarten Rezeptoren befinden.

Die kreisförmige Anordnung in Fig. 9c) besteht aus Rezeptoren, die sich auf einer Reihe von Linien befinden, die einen gemeinsamen Ursprung haben, z.B. 30 Meter hinter dem Fahrzeug. Die Linien sind in gleichem Abstand zwischen ±45° angeordnet Der Rezeptorabstand ist proportional zum Logarithmus des Abstands zum Ursprung, was eine höhere Abtastrate näher am Ursprung gewährleistet. Die Varianzen werden wiederum so gewählt, dass alle Bereiche zwischen den Rezeptoren ausgefüllt werden. Dieses Design erhöht die Auflösung näher am Fahrzeug, verringert aber die Abtastung weiter entfernt. Es führt zudem zu Rezeptoren mit einer Selektivität bezüglich einer bevorzugten Orientierung.

Die kreisförmig hexagonale Anordnung in Fig. 9d) ist eine Variation der kreisförmigen Anordnung. Bei diesem Ansatz werden der gleiche Rezeptorabstand entlang von Linien, die vom gemeinsamen Ursprung ausgehen, und die gleiche kreisförmige Anordnung verwendet, aber jeder zweite Ring von Rezeptoren wird um einen Winkel um den Ursprung gedreht, der dem halben Winkel zwischen zwei benachbarten Linien entspricht. Dies führt zu einem Abtastmuster, das einer hexagonal Anordnung ähnelt, was wiederum Aliasing-Artefakte reduziert.

Unabhängig von der gewählten Anordnung werden alle Antworten in einem rezeptiven Feld ausgewertet, um einen Merkmalsvektor zu bilden. Der Merkmalsvektor kann dann als Eingabe für ein beliebiges Regressionsmodell verwendet werden.

Anstatt rezeptive Felder von Hand zu erzeugen, können genetische Algorithmen zur Erzeugung der rezeptiven Felder verwendet werden. Zu diesem Zweck werden die rezeptiven Felder in einen Vektor mit reellen Werten kodiert, der ein Genom darstellt. Die Fitness des rezeptiven Feldes ist definiert durch die Summe der erfassten Input-Varianz aller Rezeptoren sowie durch einen negativen Trainingsverlust. Die rezeptiven Felder werden dann durch Anwendung genetischer Operatoren entwickelt, insbesondere durch Anwendung eines Mutationsoperators und eines Kreuzungsoperators. Der Mutationsoperator nutzt dabei gaußsches Rauschen, während der Kreuzungsoperator vorzugsweise auf Einzelpunkt-Kreuzung (Single Point Crossover) basiert. Leistungsstärkere Individuen haben eine höhere Chance der Reproduktion. Daher steigt die Fitness nach jeder Generation.

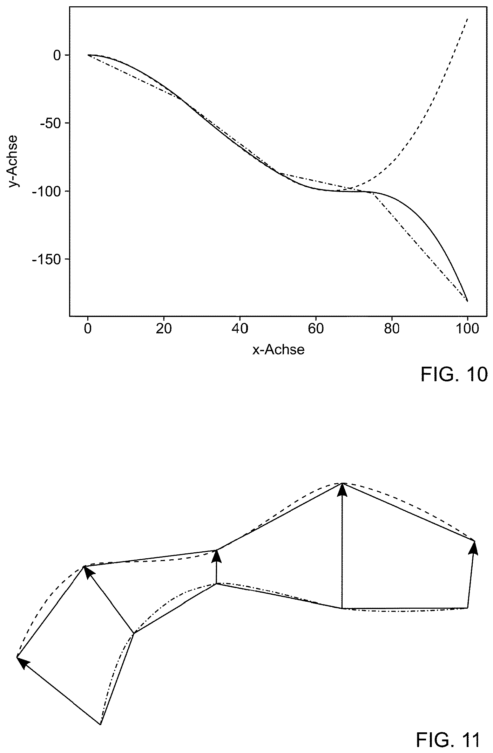

Für die Vorhersage der Straßenränder durch ein neuronales Netz kommen unterschiedliche Ausgabemodelle für die Polynome in Betracht. Einige Beispiele für Ausgabemodelle zur Beschreibung der Straßenränder sind in Fig. 10 dargestellt. Die Parameter zur Beschreibung der Polynome sind hochgradig nichtlinear und beeinflussen die geometrische Form auf unterschiedliche Weise. Dies erschwert das Erlernen eines Regressionsmodells, sodass es sinnvoll ist, einige Vereinfachungen vorzunehmen. Beispielsweise wird für alle Modelle der Startpunkt des Vorhersagefensters gleich 0 gesetzt. Diese Vereinfachung hat keinen negativen Einfluss auf die Ergebnisse.

Die durchgezogene Linie veranschaulicht eine Beschreibung durch abschnittsweise definierte Polynome, wobei eine variable oder feste Fenstergröße genutzt werden kann. Dabei handelt es sich um eine sehr komplexe Darstellung mit Beschränkungen, die zudem eine angepasste Verlustfunktion für das Training des neuronalen Netzes erfordert. Die Fenstergröße lässt sich allein auf Grundlage der Rezeptorantworten nur schwer vorhersagen. Daher wird die Fenstergröße vorzugsweise auf einen konstanten Wert gesetzt.

Die Beschreibung durch abschnittsweise definierte Polynome kann für ein neuronales Netz relativ schwer zu erlernen sein. Daher kann alternativ eine Beschreibung durch ein einziges Polynom umgesetzt werden, die in Fig. 10 durch die gestrichelte Linie veranschaulicht wird. Auch hier kann wieder eine variable oder feste Fenstergröße genutzt werden, wobei eine feste Fenstergröße bevorzugt ist. Die Darstellung ist ebenfalls relativ komplex, hat aber weniger Beschränkungen. Allerdings ist auch in diesem Fall eine angepasste Verlustfunktion für das Training des neuronalen Netzes erforderlich.

Als weitere Alternative kommt eine Beschreibung als Polygonzug aus linear interpolierten Punkten mit konstantem Abstand der Stützpunkte auf der x-Achse in Betracht. Ein solcher Polygonzug wird in Fig. 10 durch die Strichpunktlinie veranschaulicht. Die Fenstergröße wird vorzugsweise auf einen konstanten Wert gesetzt. Dieser Ansatz vereinfacht die Darstellung, erhöht allerdings die Dimensionalität des Ausgaberaums. Das Regressionsmodell ermittelt die y-Koordinaten für eine Liste fester x-Koordinaten vor dem Fahrzeug. Dadurch wird zwar die implizite Glattheit im Vergleich zu den Polynomdarstellungen aufgegeben, aber die Flexibilität des Modells erhöht und die Darstellung der Vorhersage im Vergleich zu den komplexeren Polynommodellen vereinfacht. Wenn eine geringe Anzahl von abgetasteten Koordinaten verwendet wird, kann ein Polynom mit einem einfachen Least-Squares-Solver an die ermittelten Punkte angepasst werden, um eine Polynombeschreibung der Straßenränder zu rekonstruieren.

Das Regressionsmodell wird vorzugsweise direkt auf den Parametervektor trainiert. Allerdings sind ähnliche Lösungen im Parameterraum nicht notwendigerweise auch im geometrischen Raum ähnlich. Daher wird bevorzugt eine angepasste Verlustfunktion genutzt. Anstatt die Vorhersagefehler im Parameterraum zu berechnen, wird ein Verlust im geometrischen Raum definiert. Dies kann durch Abtastung von Polynomen im Ego-Koordinatensystem an äquidistanten Punkten entlang der x-Achse realisiert werden. Fig. 11 veranschaulicht eine solche Verlustfunktion, bei der die durchschnittliche Länge der Pfeile minimiert wird, die die Abweichung zwischen der Grundwahrheit (gestrichelte Linie) und der Vorhersage (Strichpunktlinie) repräsentieren.

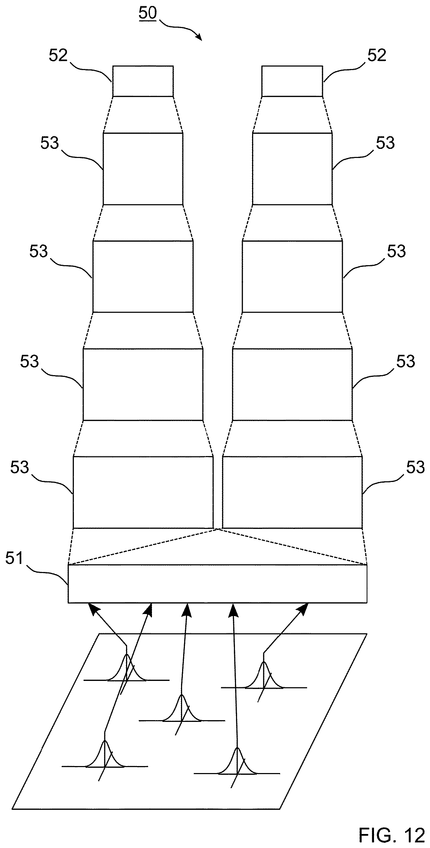

Zum Erlernen der Abbildung zwischen den Eingangsdaten und den Ausgangsdaten können verschiedene Regressionsmodelle durch die Netzwerkarchitekturen umgesetzt werden. Diese sind in Fig. 12 bis Fig. 15 dargestellt. Der Kasten unten stellt den Merkmalsraum 51 dar, der durch Anwendung des rezeptiven Feldes auf die Eingabedaten erhalten wurde. Der Kasten oben stellt die Ausgabeschicht 52 dar, die eine Vorhersage für die linke/rechte/kombinierte Straßengeometrie erzeugt.

Fig. 12 zeigt zwei getrennte Netzwerke 50 für den linken und den rechten Straßenrand. Bei diesem Ansatz prädizieren zwei einfache, unabhängige, vollständig verbundene (Fully Connected) neuronale Netze 50 die linke und rechte Straßengrenze getrennt, ohne die Möglichkeit, Informationen zwischen den Netzen 50 auszutauschen. Jedes der neuronalen Netze 50 weist eine Reihe von dichten bzw. vollständig verbundenen Schichten 53 (Dense Layer/Fully Connected Layer) auf. Der Merkmalsraum 51 ist in diesem Fall ein eindimensionaler Merkmalsvektor.

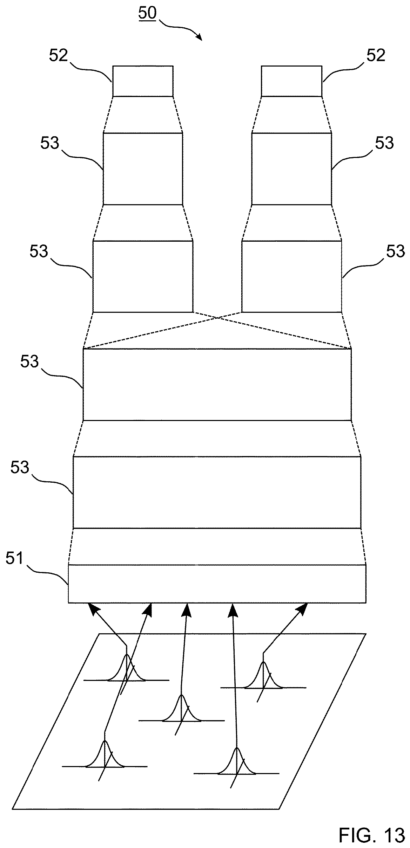

Fig. 13 zeigt ein Netzwerk 50 mit einigen gemeinsam genutzten dichten bzw. vollständig verbundenen Schichten 53 und einigen aufgabenspezifischen dichten bzw. vollständig verbundenen Schichten 53. Dieses Netzwerk 50 baut gemeinsame und aufgabenspezifische Merkmale für den linken und den rechten Straßenrand auf. Zwei getrennte Ausgabeschichten 52 sagen die einzelnen Straßenränder voraus. Der Merkmalsraum 51 ist wiederum ein eindimensionaler Merkmalsvektor.

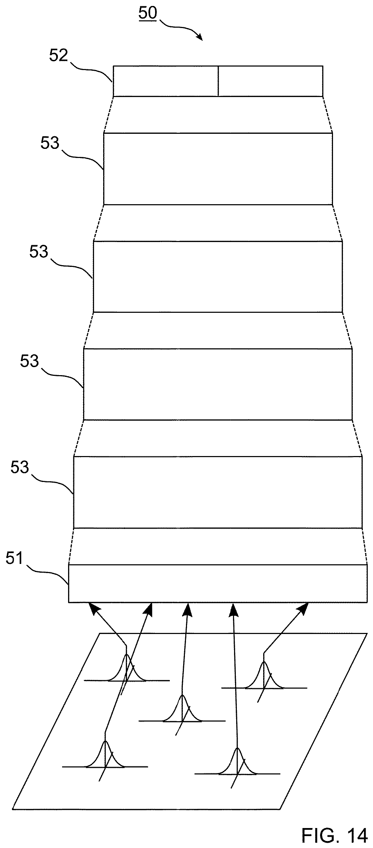

Fig. 14 zeigt ein Netzwerk 50 mit ausschließlich gemeinsam genutzten dichten bzw. vollständig verbundenen Schichten 53. Die Ausgabe der Ausgabeschicht 52 ist in diesem Fall eine Liste von aneinandergehängten Vorhersagen für den linken und den rechten Straßenrand. Der Merkmalsraum 51 ist auch hier ein eindimensionaler Merkmalsvektor.

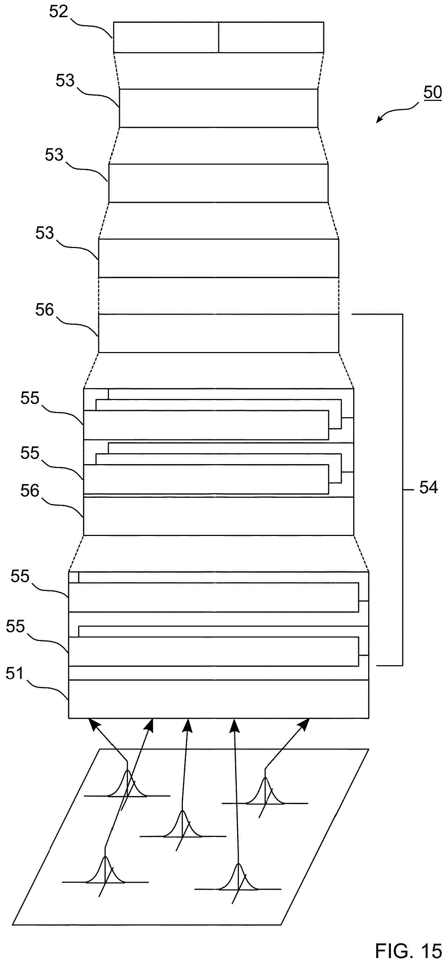

Fig. 15 zeigt ein Netzwerk 50, bei dem ein neuronales Faltungsnetzwerk 54 mit einer Reihe von Faltungsschichten 55 (Convolution Layer) und Subsampling-Schichten 56 (Max Pooling Layer) verwendet wird. An das neuronale Faltungsnetzwerk 54 schließen sich wiederum einige dichte bzw. vollständig verbundene Schichten 53 an. Der Merkmalsraum 51 besteht aus einem Raster von N×M Werten, das aus dem vom rezeptiven Feld bereitgestellten eindimensionalen Merkmalsvektor abgeleitet wird. Der 1D-Merkmalsvektor wird quasi in ein niedrig aufgelöstes 2D-Bild der Umgebung transformiert.

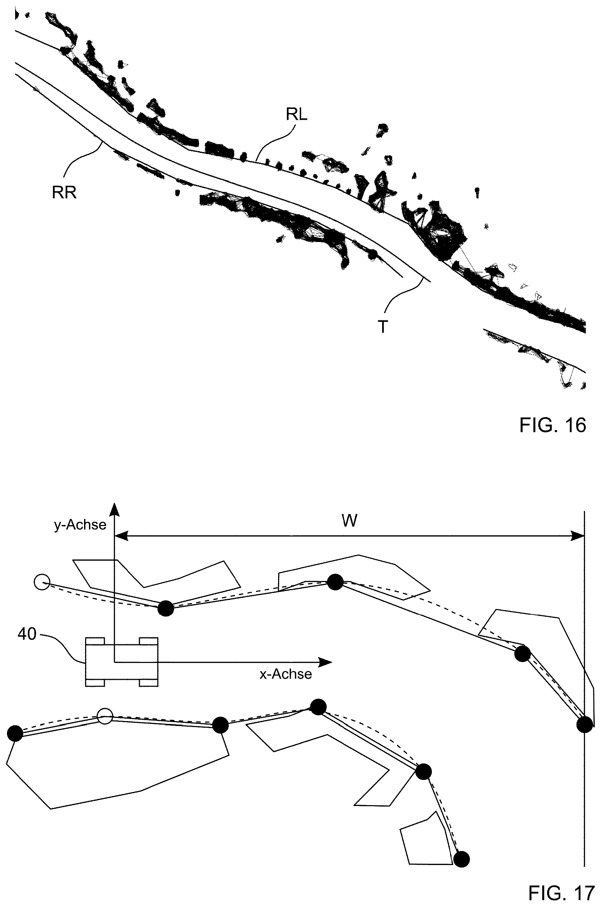

Für das Training des neuronalen Netzes müssen Grundwahrheiten für die Trainingsdaten bereitgestellt werden. Dies kann mit Hilfe eines interaktiven Werkzeugs erfolgen. Die Straßenränder werden dabei als ein Satz von Polygonzügen modelliert. Ein Beispiel einer solchen Modellierung zeigt Fig. 16. Neben der Trajektorie T sind der linke Straßenrand RL und der rechte Straßenrand RR zu erkennen, die jeweils durch einen Polygonzug repräsentiert werden. Die Polygonzüge können durch einen Nutzer des interaktiven Werkzeugs verändert werden, indem Punkte verschoben, hinzugefügt oder entfernt werden, Linien in Segmente aufgeteilt oder benachbarte Segmente zusammengefasst werden. Bei Verfügbarkeit kann die Grundwahrheit durch eine bestehende Anwendung initialisiert werden, sodass die Kennzeichnung der Daten nicht von Grund auf erfolgen muss.

Die gekennzeichneten Polygonzüge sind zeitunabhängig und können nicht unmittelbar als framebezogene Grundwahrheit verwendet werden. Daher sind zusätzliche Schritte erforderlich. Für jeden Frame der Eigenbewegung des Fahrzeugs wird eine lokale Grundwahrheit in Form eines Polynoms generiert. Das Polynom wird dann an eine Untermenge der Punkte des Polygonzuges angepasst. Die Fenstergröße und der Übergangspunkt für das Polynom werden dabei iterativ bestimmt. Fig. 17 zeigt ein Beispielszenario für die Polynomanpassung. Polylinien werden in das Ego-Koordinatensystem transformiert und der erste Punkt hinter dem Fahrzeug 40 entlang der x-Achse und in einer lokalen Nachbarschaft gefunden. Die entsprechenden Punkte sind durch die nicht gefüllten Kreise markiert. Die Polynomanpassung innerhalb eines Fensters W ist als hierarchischer Ansatz für jede der beiden unabhängigen Straßengrenzen implementiert. Die gestrichelten Linien zeigen eine mögliche Lösung an, die durch den Anpassungsalgorithmus generiert wird.

Als Ergebnis der Modellierung liegt eine Grundwahrheit mit variabler Fenstergröße vor. Dabei ist eine framebezogene Grundwahrheit verfügbar. Die Daten können genutzt werden, um Modelle anhand von Beispielen zu evaluieren oder zu trainieren. Vorzugsweise werden die Daten noch einer manuellen oder automatischen Filterung unterzogen. Dabei können z.B. sehr kurze Grundwahrheit-Segmente entfernt werden. Ebenso können Segmente entfernt werden, für die zu wenige Radar-Cluster vorliegen, bei denen die Grundwahrheit für den rechten oder den linken Straßenrand nicht verfügbar ist, bei denen der Anpassungsalgorithmus fehlschlägt oder die nicht gekennzeichnet werden können.

### Referenzen

[1] H. Kong et al.: "Vanishing point detection for road detection", 2009 IEEE Conference on Computer Vision and Pattern Recognition (2009), S. 96-103.
[2] W. Zhang: "Lidar-based road and road-edge detection", 2010 IEEE Intelligent Vehicles Symposium (2010), S. 845-848.
[3] F. Homm et al.: "Efficient occupancy grid computation on the GPU with lidar and radar for road boundary detection", 2010 IEEE Intelligent Vehicles Symposium (2010), S. 1006-1013.

## Patentansprüche

1. Verfahren zum Vorhersagen eines Straßenverlaufs auf Basis von Radardaten eines Radarsensors (41) eines Kraftfahrzeugs (40), mit den Schritten:
- Empfangen (S1) der Radardaten (RD);
- Akkumulieren (S2) der Radardaten (RD) in einem Messraster;
- Bilden (S3) von Clustern (C) für Objekte im Messraster;
- Verarbeiten (S5) der Cluster (C) zum Bestimmen von Polynomen (P) zur Beschreibung der Straßenränder, wobei Cluster-Beschreibungen (B) für die Cluster (C) generiert werden (S4), wobei die Cluster (C) mittels eines rezeptiven Feldes in einen Merkmalsraum transformiert werden, wobei die Beschreibung der Cluster (C) im Merkmalsraum als Eingangsgröße für ein neuronales Netz dient, wobei das neuronale Netz zur Regression von Parametern der Polynome (P) zur Beschreibung der Straßenränder trainiert ist; und
- Ausgeben (S6) der Polynome (P).

2. Verfahren gemäß Anspruch 1, wobei die Cluster-Beschreibungen (B) jeweils ein Zentrum des Clusters (C) und eine Beschreibung einer Hülle des Clusters (C) in Form eines Hüllenpolygons umfassen.

3. Verfahren gemäß einem der vorhergehenden Ansprüche, wobei die Cluster (C) zur Transformation in den Merkmalsraum mit den einzelnen Rezeptoren des rezeptiven Feldes gefaltet werden.

4. Verfahren gemäß Anspruch 3, wobei die Zentren der Rezeptoren und die Kovarianzmatrizen der Rezeptoren manuell oder durch evolutionäre Algorithmen bestimmt werden.

5. Computerprogramm mit Instruktionen, die bei Ausführung durch einen Computer den Computer zur Ausführung der Schritte eines Verfahrens gemäß einem der Ansprüche 1 bis 4 zum Vorhersagen eines Straßenverlaufs auf Basis von Radardaten (RD) eines Radarsensors (41) eines Kraftfahrzeugs (40) veranlassen.

6. Vorrichtung (20) zum Vorhersagen eines Straßenverlaufs auf Basis von Radardaten (RD) eines Radarsensors (41) eines Kraftfahrzeugs (40), wobei die Vorrichtung (20) zur Ausführung der Schritte eines Verfahrens gemäß einem der Ansprüche 1 bis 4 eingerichtet ist.

## Claims

1. A method for predicting a road route based on radar data from a radar sensor (41) of a motor vehicle (40), comprising the steps:
- receiving (S1) the radar data (RD);
- accumulating (S2) the radar data (RD) in a measurement grid;
- forming (S3) clusters (C) for objects in the measurement grid;
- processing (S5) the clusters (C) to determine polynomials (P) for describing the edges of the road, wherein cluster descriptions (B) for the clusters (C) are generated (S4), wherein the clusters (C) are transformed into a feature space by means of a receptive field, wherein the description of the clusters (C) in the feature space serves as an input variable for a neural network, wherein the neural network is trained for the regression of parameters of the polynomials (P) for describing the edges of the road; and
- outputting (S6) the polynomials (P).

2. The method according to claim 1, wherein the cluster descriptions (B) each comprise a centre of the cluster (C) and a description of a hull of the cluster (C) in the form of a hull polygon.

3. The method according to one of the preceding claims, wherein the clusters (C) are convolved with the individual receptors of the receptive field for transformation into the feature space.

4. The method according to claim 3, wherein the centres of the receptors and the covariance matrices of the receptors are determined manually or by evolutionary algorithms.

5. A computer program comprising instructions which, when executed by a computer, cause the computer to execute the steps of a method according to one of claims 1 to 4 for predicting a road route based on radar data (RD) of a radar sensor (41) of a motor vehicle (40).

6. A device (20) for predicting a road route based on radar data (RD) of a radar sensor (41) of a motor vehicle (40), wherein the device (20) is configured to execute the steps of a method according to one of claims 1 to 4.

## Revendications

1. Procédé de prédiction d'un tracé de route en fonction des données radar d'un capteur radar (41) d'un véhicule automobile (40), comprenant les étapes suivantes :
- la réception (S1) des données radar (RD) ;
- l'accumulation (S2) des données radar (RD) dans une grille de mesure ;
- la formation (S3) de clusters (C) pour les objets dans la grille de mesure ;
- le traitement (S5) des clusters (C) pour déterminer des polynômes (P) pour décrire les bords de la route, dans lequel des descriptions de clusters (B) sont générées (S4) pour les clusters (C), dans lequel les clusters (C) sont transformés dans un espace de caractéristiques à l'aide d'un champ réceptif, dans lequel la description des clusters (C) dans l'espace de caractéristiques sert de grandeur d'entrée à un réseau neuronal, dans lequel le réseau neuronal est entraîné à régresser les paramètres des polynômes (P) pour décrire les bords de la route ; et
- l'affichage (S6) des polynômes (P).

2. Procédé selon la revendication 1, dans lequel les descriptions de clusters (B) comprennent chacune un centre du cluster (C) et une description d'une enveloppe du cluster (C) sous la forme d'un polygone d'enveloppe.

3. Procédé selon l'une des revendications précédentes, dans lequel les clusters (C) sont repliés avec les récepteurs individuels du champ réceptif pour la transformation dans l'espace des caractéristiques.

4. Procédé selon la revendication 3, dans lequel les centres des récepteurs et les matrices de covariance des récepteurs sont déterminés manuellement ou par des algorithmes évolutionnaires.

5. Programme informatique avec instructions qui, lorsqu'elles sont exécutées par un ordinateur, amènent l'ordinateur à exécuter les étapes d'un procédé selon l'une des revendications 1 à 4 pour prédire un tracé de route en fonction des données radar (RD) d'un capteur radar (41) d'un véhicule automobile (40).

6. Dispositif (20) pour prédire un tracé de route en fonction des données radar (RD) d'un capteur radar (41) d'un véhicule automobile (40), dans lequel le dispositif (20) est configuré pour effectuer les étapes d'un procédé selon l'une des revendications 1 à 4.
